# EUROPÄISCHE PATENTSCHRIFT

(11) **EP 2 131 949 B1**
(45) Veröffentlichungstag und Bekanntmachung des Hinweises auf die Patenterteilung: **11.12.2013**
(21) Anmeldenummer: 08717947.9
(22) Anmeldetag: 18.03.2008
(51) Int. Cl.: B01D 53/94, B01J 35/04, B01J 37/02, B05D 7/22, C04B 41/81, B01D 46/24

(54) **VERFAHREN ZUR EINBRINGUNG EINER KATALYTISCHEN BESCHICHTUNG IN DIE POREN EINES KERAMISCHEN DURCHFLUSS-WABENKÖRPERS**
METHOD FOR INTRODUCING A CATALYTIC COATING INTO THE PORES OF A CERAMIC HONEYCOMB FLOW BODY
PROCÉDÉ POUR APPLIQUER UN REVÊTEMENT CATALYTIQUE DANS LES PORES D'UN CORPS CÉRAMIQUE EN NID D'ABEILLES TRAVERSÉ PAR UN ÉCOULEMENT DIRECT

(30) Priorität: 19.03.2007 DE 102007012928
(43) Veröffentlichungstag der Anmeldung: 16.12.2009
(73) Patentinhaber: Umicore AG & Co. KG, 63457 Hanau-Wolfgang (DE)
(72) Erfinder: HASSELMANN, Wolfgang, 79618 Rheinfelden (DE)
(74) Vertreter: Clauswitz, Kai-Uwe Wolfram
(86) Internationale Anmeldenummer: PCT/EP2008/053214
(87) Internationale Veröffentlichungsnummer: WO 2008/113801

(56) Entgegenhaltungen:
- EP-A- 1 719 881
- WO-A-2004/091786
- WO-A2-2007/073807
- DE-A1- 10 122 939
- DE-A1-102004 040 550
- GB-A- 2 275 624
- US-A- 4 557 682
- US-A- 4 670 205
- US-A1- 2002 042 344

## Beschreibung

Die Erfindung betrifft ein Verfahren, mit welchem eine katalytische Beschichtung in die Poren eines keramischen Durchfluß-Wabenkörpers eingebracht werden kann unter Verwendung einer Katalysatorsuspension, die in einer Trägerflüssigkeit Katalysatorkomponenten als Feststoffe und/oder in gelöster Form enthält. Die beschichteten Wabenkörper werden bevorzugt für die Reinigung von Autoabgasen eingesetzt.

Für die Reinigung von Autoabgasen werden schon seit Jahrzehnten Katalysatoren eingesetzt, die in Form einer Beschichtung auf sogenannten Wabenkörpern aufgebracht sind. Die Wabenkörper werden von parallelen Strömungskanälen für die Abgase durchzogen. Keramische Wabenkörper werden aus feuerfesten Materialien hergestellt. In der überwiegenden Zahl handelt es sich dabei um Cordierit, einem Magnesium-Aluminiumsilikat. Weitere gebräuchliche keramische Materialien sind Siliziumkarbid, Aluminiumoxid, Zirkonoxid, Zirkonmullit, Mullit, Siliziumnitrid, Aluminiumtitanat oder Titanoxid. Die Wabenkörper werden aus diesen Materialien durch Extrusion hergestellt und weisen im allgemeinen eine offene Porenstruktur auf.

Die Strömungskanäle durchziehen die Wabenkörper von der Eintrittsstirnfläche zur Austrittsstirnfläche. Die Kanäle haben im allgemeinen einen quadratischen Querschnitt und sind in einem engen Raster über den Querschnitt der Wabenkörper angeordnet. Die Zahl der Strömungskanäle pro Querschnittsfläche wird als Zelldichte bezeichnet und kann zwischen 10 und 200 cm⁻² liegen.

Bei der katalytischen Beschichtung der Wabenkörper handelt es sich um eine sogenannte Dispersionsbeschichtung, die unter Verwendung einer zumeist wäßrigen Suspension der Katalysatorkomponenten auf die Wabenkörper aufgebracht wird. Diese Beschichtung wird häufig auch als Washcoat-Beschichtung bezeichnet.

Die Katalysatorkomponenten enthalten zum Beispiel pulverförmige Trägermaterialien mit einer hohen spezifischen Oberfläche, auf der die katalytisch aktiven Komponenten, zumeist die Edelmetalle der Platingruppe Platin, Palladium, Rhodium, Iridium und Ruthenium aufgebracht sind. Die Feststoffe in der Katalysatorsuspension werden vor dem Aufbringen auf die Wabenkörper in der Regel durch Naßmahlen homogenisiert. Nach dem Mahlen weisen die Feststoffe der Suspension eine mittlere Korngröße d₅₀ zwischen 3 und 5 µm auf.

Beispiele für Trägermaterialien sind einfache und zusammengesetzte Oxide, wie aktives Aluminiumoxid, Zirkonoxid, Zinnoxid, Ceroxid oder andere Seltenerdoxide, Siliziumoxid, Titanoxid oder Silikate wie Aluminiumsilikat oder Titanate wie Barium- oder Aluminiumtitanat und Zeolithe. Besonders bewährt als temperaturbeständige Trägermaterialien haben sich insbesondere die verschiedenen Phasen von aktivem Aluminiumoxid der Übergangsreihe, welche durch Dotieren mit Siliziumoxid und Lanthanoxid, aber auch durch Zirkonoxid und Ceroxid, stabilisiert werden können.

Die katalytische Aktivität und Alterungsbeständigkeit des fertigen Katalysators ist im allgemeinen um so größer je größer die Konzentration der katalytischen Masse auf dem Wabenkörper ist. In der Praxis werden je nach Anwendungsfall 10 bis 300 g/l benötigt. Die maximal erreichbare Konzentration kann jedoch aus verschiedenen Gründen unterhalb der katalytisch erforderlichen Konzentration liegen. So nimmt mit zunehmender Konzentration und damit Schichtdicke die Haftfestigkeit der Beschichtung ab. Darüber hinaus verringern große Schichtdicken den hydraulischen Durchmesser der Strömungskanäle und erhöhen somit den Abgasgegendruck (Staudruck) des Katalysators.

Es gibt Einsatzgebiete, wie zum Beispiel die Oxidation von Kohlenwasserstoffen und Kohlenmonoxid im Dieselabgas ("Dieseloxidationskatalysator"), bei denen nur eine relativ geringe Katalysatormasse im Bereich zwischen 100 und 200 g pro Liter Wabenkörpervolumen für die Reaktion erforderlich ist. Eine weitere Erhöhung der Katalysatormasse unter Beibehaltung des Edelmetallgesamtgehaltes ist hier nicht mit einem Aktivitätsvorteil verbunden. Bei anderen katalytischen Reaktionen wie beispielsweise der Speicherung und Reduktion von Stickoxiden ("Stickoxid-Speicherkatalysator") oder der selektiven katalytischen Reduktion von Stickoxiden mittels Ammoniak ("SCR Katalysator") ist hingegen eine Erhöhung der aktiven Masse wünschenswert, was jedoch wegen der genannten Probleme mit der Haftfestigkeit der Beschichtung und dem Staudruck des fertigen Katalysators nur in Grenzen möglich ist.

Die US 5,334,570 schlägt zur Verringerung des hohen Staudrucks vor, die katalytische Beschichtung in die Poren von keramischen Wabenkörpern zu verlegen. Die in dieser Patentschrift verwendeten keramischen Wabenkörper besaßen eine offene Porosität von 30 bis 45 % und mittlere Porendurchmesser von 3 bis 10 *µ*m. Zur katalytischen Beschichtung wurden deshalb Katalysatormaterialien mit kolloidalen Partikeldurchmessern zwischen 0,001 und 0,1, bevorzugt zwischen 0,001 und 0,05 *µ*m ausgewählt, die beim Kontaktieren der Wabenkörper mit einer entsprechenden kolloidalen Beschichtungssuspension in die Poren der Wabenkörper eindringen. Gemäß der Patentschrift wurden die Wabenkörper zum Kontaktieren mit der Beschichtungssuspension in die Beschichtungssuspension eingetaucht. Auf diese Weise konnten 90 bis 95 % der kolloi-dalen Washcoat-Partikel in die Poren der Wabenkörper eingelagert werden, so daß der Querschnitt der Strömungskanäle durch die Beschichtung kaum vermindert und somit der Staudruck nur unwesentlich erhöht wurde.

In den letzten Jahren wurden keramische Wabenkörper mit deutlich erhöhter Porosität von ca. 60 bis 65 % und mittleren Porendurchmessern von 10 bis 20 *µ*m entwickelt. Zielsetzung hierbei war es, die Kanalwände für die Katalysatorpartikel durchgängig zu machen, so daß sich diese nicht nur als Schicht auf der Kanaloberfläche sondern auch im Porensystem der Wand ablagern können. Somit können bei vergleichbarer Katalysatormasse geringere Schichtdicken bzw. umgekehrt bei gleicher Katalysatorschichtdicke höhere Beladungskonzentrationen erzielt werden [Tao et al., SAE 2004-01-1293].

Zur Beschichtung von Wabenkörpern werden zumeist die katalytisch aktiven, wasserunlöslichen, pulverförmigen Komponenten in Wasser oder einer organischen Flüssigkeit suspendiert, gemahlen und das Substrat anschließend durch Tauchen in die Suspension, durch Übergießen mit der Suspension oder durch Einsaugen oder Einpumpen der Suspension beschichtet.
DE 10 2004 040 550 A1 beschreibt ein solches Verfahren für Wandflussfilter, wobei Beschichtungsmaterialien in den Poren abgelegt werden können..
US 2002/0042344 A1 zeigt die Verwendung von Schablonen zum Abdecken von Strömungskanälen, um diese selektiv zu beschichten.

Verwendet man hierbei die oben beschriebenen, neu entwickelten porösen Wabenkörper, so dringt tatsächlich ein Teil der katalytisch aktiven Substanzen in das Porensystem des Wabenkörpers ein und lagert sich dort ab. Allerdings erhöht sich dadurch die auf dem Wabenkörper abgeschiedene Katalysatormenge nur im geringen Maße.

Aufgabe der vorliegenden Erfindung ist es, ein Verfahren zur Beschichtung von porösen Wabenkörpern anzugeben, welches es gestattet, sowohl die äußeren Oberflächen der Strömungskanäle als auch die Poren der Kanalwände mit einem Katalysator zu beschichten. Hierdurch sollen die Wabenkörper mit einer größeren Menge an Katalysatormaterial beschichtet werden können als es mit konventionellen Verfahren möglich wäre, ohne daß dabei der Staudruck des Wabenkörper erhöht wird.

Das Verfahren verwendet keramische Wabenkörper, welche von einer Eintrittsstirnfläche zu einer Austrittsstirnfläche von parallelen Strömungskanälen durchzogen sind, die durch Kanalwände mit einer offenen Porenstruktur gegeneinander abgegrenzt sind. Zur Beschichtung wird eine Katalysatorsuspension verwendet, welche in einer Trägerflüssigkeit suspendierte Feststoffe enthält. Das Verfahren zur Lösung der Aufgabe weist folgende Verfahrensschritte auf:
a) Kontaktieren der beiden Stirnflächen des Wabenkörpers mit je einer Lochmaske mit offenen und geschlossenen Bereichen, wobei die Lochmasken so angeordnet werden, daß die offenen Bereiche der Lochmaske auf der einen Stirnfläche den geschlossenen Bereichen der Lochmaske auf der anderen Stirnfläche gegenüberliegen,
b) Einbringen der Katalysatorsuspension durch die Lochmaske auf der einen Stirnfläche des Wabenkörpers bis die Suspension durch die Lochmaske auf der anderen Stirnfläche austritt,
c) Ausblasen oder Absaugen eventuell überschüssiger Katalysatorsuspension,
d) Lösen des Kontaktes mit den Lochmasken und
e) Kalzinieren des beschichteten Wabenkörpers,
dadurch gekennzeichnet, daß der Wabenkörper eine Porosität zwischen 30 und 90% mit einem mittleren Porendurchmesser von 10 bis 50 µm aufweist, und daß die Korngröße d₉₀ der Feststoffe der Suspension kleiner ist als der mittlere Porendurchmesser der Poren des Wabenkörpers.

Im Rahmen der vorliegenden Erfindung werden unter dem Begriff Wabenkörper sogenannte Durchfluß-Wabenkörper verstanden, deren Strömungskanäle an beiden Enden offen sind. Erfindungsgemäß werden diese Strömungskanäle nur zum Zweck der Beschichtung vorübergehend wechselseitig an Ein- und Austrittsstirnfläche verschlossen. Im Gegensatz hierzu stehen die sogenannten Wandfluß-Wabenkörper, bei denen benachbarte Strömungskanäle permanent wechselseitig an Ein- und Austrittsstirnfläche verschlossen sind.

Im ersten Verfahrensschritt werden die Ein- und Austrittsstirnflächen mit je einer Lochmaske abgedeckt. Dabei liegen die offenen Bereiche (Löcher) der einen Lochmaske den geschlossenen Bereichen der anderen Lochmaske gegenüber.

Während des Beschichtungsvorganges ähnelt die Anordnung des Wabenkörpers zwischen den inversen Lochmasken einem Wandflußfilter zur Entfernung von Ruß aus einem Dieselabgas. Anders als beim Wandflußfilter, bei dem benachbarte Strömungskanäle wechselseitig an den Stirnflächen verschlossen sind, hat es sich allerdings gezeigt, daß es für ein gutes Beschichtungsergebnis ausreichend ist, wenn die offenen und geschlossenen Bereiche der Lochmasken jeweils mehrere Strömungskanäle des Wabenkörpers überdecken. Dieses Ergebnis ist besonders bei hochzelligen Wabenkörpern mit einer Zelldichte von mehr als 30 cm⁻² vorteilhaft, da es die Anforderungen an die Lochmasken verringert. Außerdem müssen die Strömungskanäle nicht exakt zu den Löchern der Lochmasken ausgerichtet werden, was der Fall wäre, wenn die Lochmasken das Zellmuster der Strömungskanäle aufweisen müßten.

Bei niedrigzelligen Wabenkörpern kann es allerdings vorteilhaft sein, wenn die Löcher der Lochmasken im Muster der Strömungskanäle auf den Stirnflächen angeordnet sind. Dann muß allerdings beim Kontaktieren der Lochmasken mit den Stirnflächen des Wabenkörpers auf eine genaue Ausrichtung des Lochmusters zu den Strömungskanälen geachtet werden, das heißt die offenen und geschlossenen Bereiche der Lochmasken werden in diesem Fall so zueinander positioniert, daß benachbarte Strömungskanäle während der Beschichtung wechselseitig verschlossen sind. In diesem Fall weisen also die beiden Lochmasken zueinander inverse Lochmuster auf.

Die offenen und geschlossenen Bereiche der beiden Lochmasken sind in unterschiedlichen aber periodischen Mustern mit einem Gitterabstand voneinander angeordnet. Die offenen Bereiche können kreisförmig, quadratisch, rechteckig, sechseckig oder schlitzförmig ausgebildet sein. Die Querschnittsflächen der Löcher auf der einen Lochmaske können von den Löchern auf der anderen Stirnfläche abweichen. Dies ermöglicht es dem Fachmann die Durchströmung der Kanalwände der Wabenkörper zu optimieren.

Im zweiten Verfahrensschritt wird die Katalysatorsuspension durch die Lochmaske auf der einen Stirnfläche des Wabenkörpers eingebracht, bis die Suspension durch die Lochmaske auf der anderen Stirnfläche austritt. Hierdurch wird die Katalysatorsuspension gezwungen, durch die porösen Kanalwände hindurchzutreten, um von der einen Stirnfläche zur anderen zu gelangen. Dabei werden die Poren des Wabenkörpers mit der Katalysatormasse beschichtet.

In den weiteren Verfahrensschritten wird überschüssige Katalysatorsuspension ausgeblasen oder ausgesaugt. Dann wird der Kontakt mit den Lochmasken gelöst und der Wabenkörper kalziniert zur Fixierung der Beschichtung und Überführung der Katalysatorbestandteile in ihre katalytisch aktive Form.

Beim Einbringen der Katalysatorsuspension in den Wabenkörper wird der Wabenkörper mit seinen Strömungskanälen bevorzugt senkrecht ausgerichtet und die Suspension durch die Lochmaske auf der unteren Stirnfläche in den Wabenkörper eingebracht bis sie durch die Lochmaske auf der der oberen Stirnfläche austritt. Zu diesem Zweck kann die Katalysatorsuspension in den Wabenkörper eingepreßt, eingepumpt oder eingesaugt werden.

Die Lochmasken liegen während der Beschichtung auf den Stirnflächen des Wabenkörpers auf und sind deshalb keinen großen mechanischen Belastungen ausgesetzt. Bevorzugt werden sie daher aus Kunststoff angefertigt, was auch die Gefahr der Beschädigung des Wabenkörpers vermindert. Einen verbesserten Schutz gegen ungewollte Beschädigung der Stirnflächen des Wabenkörpers beim Kontaktieren mit den Masken erhält man, wenn die Lochmasken auf der Seite, mit welcher sie mit den Stirnflächen des Wabenkörpers in Kontakt gebracht werden, mit einer elastischen Kunststoff-Folie laminiert werden. Die elastische Kunststoff-Folie verbessert auch die Abdichtung zwischen Lochmaske und Stirnfläche und verhindert somit einen ungewollten Flüssigkeitsaustritt zwischen Maske und Wabenkörper.

Im Gegensatz zu konventionellen Beschichtungsverfahren von Wabenkörpern, zwingt das Verfahren die Katalysatorsuspension, beim Beschichtungsvorgang durch das Porensystem der Kanalwände zu strömen. Hierdurch werden die Oberflächen der Poren gezielt beschichtet. Abhängig von der Korngrößenverteilung der Feststoffe in der Beschichtungssuspension und vom mittleren Porendurchmesser des keramischen Materials des Wabenkörpers kommt es hierbei zu einer mehr oder weniger ausgeprägten Filtrierung der Beschichtungssuspension. Es ist also durch entsprechende Wahl der Komgrößenverteilung möglich, das Massenverhältnis der in den Poren abgeschiedenen Beschichtungssuspension zu der auf den Kanalwänden abgeschiedenen Beschichtungssuspension definiert einzustellen. Bevorzugt wird jedoch angestrebt, einen hohen Anteil der Katalysatorsuspension in die Poren der Kanalwände einzubringen, um die Beschichtung der Wandflächen bei der gewünschten Beschichtungskonzentration so gering wie möglich zu halten. Bei einer entsprechend geringen Beschichtungskonzentration kann sogar die gesamte Katalysatormasse in den Poren untergebracht werden.

Für das erfindungsgemäße Verfahren sind hochporöse Wabenkörper mit einer Porosität zwischen 30 und 90 % und mit einem mittleren Porendurchmesser zwischen 10 und 50 µm geeignet. Abhängig von der mittleren Porengröße müssen die Feststoffe der Beschichtungsdispersion entsprechend kleine Partikeldurchmesser aufweisen. Bevorzugt werden die Feststoffe in der Katalysatorsuspension so fein vermahlen, daß der d₉₀-Komdurchmesser kleiner ist als der mittlere Porendurchmesser des Wabenkörpers.

Für mittlere Porengrößen im Bereich zwischen 3 und 10 µm werden bevorzugt Feststoffe mit mittleren Partikeldurchmessern im kolloidalen Bereich (<1 µm eingesetzt). Geeignet sind aber auch Feststoffe mit einer mittleren Korngröße d₅₀ im Bereich zwischen 3 und 5 µm, beziehungsweise zwischen 1 und 3 µm. Aber auch Feststoffe mit einem breiten Kornspektrum oder Feststoffe mit einer mehrmodalen Korngrößenverteilung können verwendet werden. Es findet dann bei der Beschichtung eine Filtration statt: Partikel mit kleinen Partikeldurchmessern werden in den Poren des Wabenkörpers abgelagert, während die größeren Partikel auf den Kanalwänden abgeschieden werden.

In diese Poren kann ein großer Anteil der Feststoffe der Beschichtungssuspension eingelagert werden, wenn der d₉₀-Durchmesser der Feststoffpartikel kleiner ist als der mittlere Porendurchmesser der Poren des Wabenkörpers.

Das erfindungsgemäße Verfahren gestattet es, im Vergleich zu Standard-Wabenkörpem mehr katalytisch aktive Masse bei vergleichbarer Schichtdicke auf der Kanaloberfläche bzw. hei vergleichbarem hydraulischem Durchmesser des Strömungskanals auf die Träger aufzuhringen.

Zur Durchführung des Beschichtungsverfahrens kann eine Beschichtungsanlage verwendet werden, wie sie zum Beispiel in der WO 2004/091786 der Anmelderin beschrieben ist.

Die folgenden Beispiele und die Figuren sollen die Erfindung näher erläutern. Es zeigen
- **Figur 1:**: Beschichtungsstation zur Durchführung des Verfahrens
- **Figur 2:**: Wabenkörper mit unterer und oberer Werkstückaufnahme
- **Figur 3:**: Lochmaske der unteren Werkstückaufnahme nach Beispiel
- **Figur 4:**: Lochmaske der oberen Werkstückaufnahme nach Beispiel

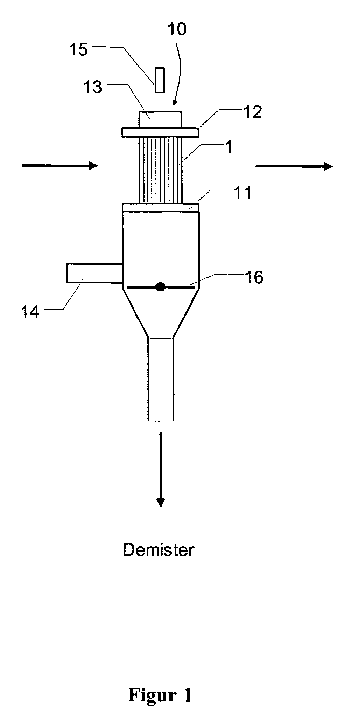

Zur Durchführung des Beschichtungsverfahrens kann eine Beschichtungsanlage verwendet werden, wie sie zum Beispiel in der WO 2004/091786 der Anmelderin beschrieben ist. Figur 1 zeigt eine Beschichtungsstation aus dieser Beschichtungsanlage. Die Beschichtungsstation besteht aus einem rohrförmigen Unterteil, auf das am oberen Ende eine Werkstückaufnahme (11) aufgesetzt ist. Die Katalysatorsuspension wird dem Unterteil über die Rohrleitung (14) aus einem Reservoir zugeführt. Das Unterteil ist während der Zufuhr von Katalysatorsuspension nach unten durch eine Klappe (16) abgeschlossen. Unterhalb der Klappe ist das Unterteil mit einem Unterdruckreservoir und einem Demister verbunden.

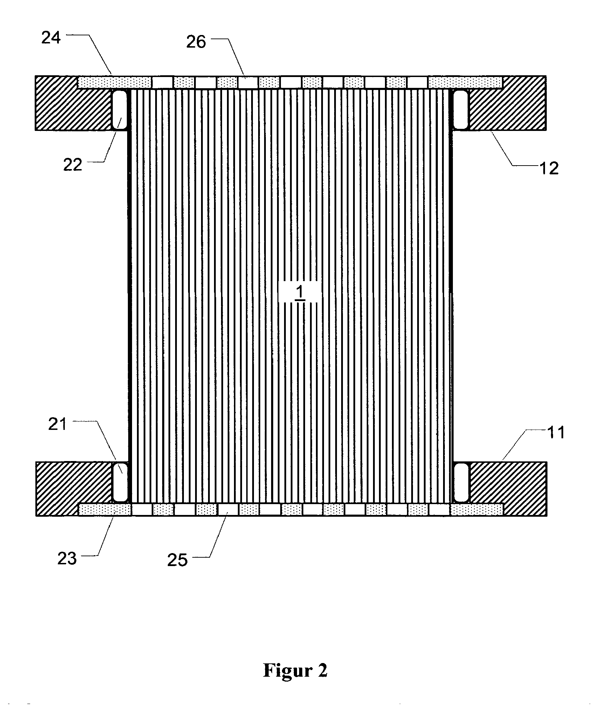

Der zu beschichtende Wabenkörper (1) wird der Beschichtungsstation zum Beispiel von links zugeführt und in die Werkstückaufnahme (11) eingesetzt. Dann wird auf die obere Stirnfläche des Wabenkörpers eine zweite Werkstückaufnahme (12) mit einem Überlauf (13) aufgesetzt. Die Werkstückaufnahmen enthalten die Lochmasken und aufblasbare Dichtungsmanschetten, um eine Austreten von Katalysatorsuspension zwischen Wabenkörper und Werkstückaufnahme zu verhindern. Die Ausbildung der Werkstückaufnahmen ist beispielhaft in Figur 2 dargestellt.

Zur Durchführung der Beschichtung wird bei geschlossener Klappe (16) Katalysatorsuspension in das Unterteil der Beschichtungsstation eingepumpt und durch die untere Stirnfläche in den Wabenkörper gedrückt bis die Suspension an der oberen Stirnfläche austritt. Das Austreten der Suspension wird vom Sensor (15) detektiert und beendet das Einpumpen der Suspension. Sofort danach wird die Klappe (16) geöffnet und die Katalysatorsuspension durch Anlegen eines Unterdruckes aus dem Wabenkörper herausgesaugt. Danach wird der Wabenkörper aus der Beschichtungsstation entnommen und zur Fixierung der Katalysatorsuspension getrocknet und kalziniert.

Figur 2 zeigt Wabenkörper und Werkstückaufnahmen im Detail. Die untere Werkstückaufnahme (11) enthält eine Lochmaske (23) mit Löchern (25). Der Wabenkörper wird zur Beschichtung auf die Lochmaske (23) aufgesetzt. Mit Hilfe der aufblasbaren Gummimanschette (21) wird der Wabenkörper gegen Flüssigkeitsaustritt abgedichtet. Die obere Werkstückaufnahme ist ganz analog aufgebaut.

Mit Hilfe der aüfblasbaren Gummimanschette (22) wird der Wabenkörper gegen Flüssigkeits aüstrïtt abgedichtet.

Bezugsziffer (24) bezeichnet die obere Lochmaske mit den Löchern (26). Die Löcher der oberen Lochmaske sind gegenüber den Löchern der unteren Lochmaske versetzt, so daß den Löchern in der oberen Lochmaske geschlossene Bereiche der unteren Lochmaske gegenüberliegen.

Die Löcher in den Lochmasken (23) und (24) können größer als der Querschnitt der Strömungskanäle sein und brauchen daher auch nicht in ihrer Lage zu den Strömungskanälen des Wabenkörpers justiert werden.

### Vergleichsbeispiel:

Es wurde ein Wabenkörper aus Cordierit mit einem Pt/Aluminiumoxid-Oxidationskatalysator konventionell beschichtet. Der Wabenkörper hatte folgende Eigenschaften:

| | |
|---|---|
| Durchmesser: | 12 cm |
| Länge: | 7 cm |
| Zelldichte: | 62 cm⁻² |
| Mittlerer Porendurchmesser: | 25 *µ*m |

Die Katalysatorsuspension besaß einen Feststoffanteil von 42 Gew.-%. Die Feststoffe der Suspension wurden vor dem Beschichten auf eine mittlere Korngröße d₅₀ zwischen 3 bis 5 *µ*m mit einer d₉₀ Korngröße von weniger als 19 *µ*m vermahlen.

Der beschichtete Wabenkörper wies nach dem Kalzinieren eine Beschichtung von 120 g/l auf.

### Beispiel:

Es wurde ein weiterer Wabenkörper mit denselben Eigenschaften wie im Vergleichsbeispiel mit der Katalysatorsuspension vom Vergleichsbeispiel nach dem erfindungsgemäßen Verfahren beschichtet.

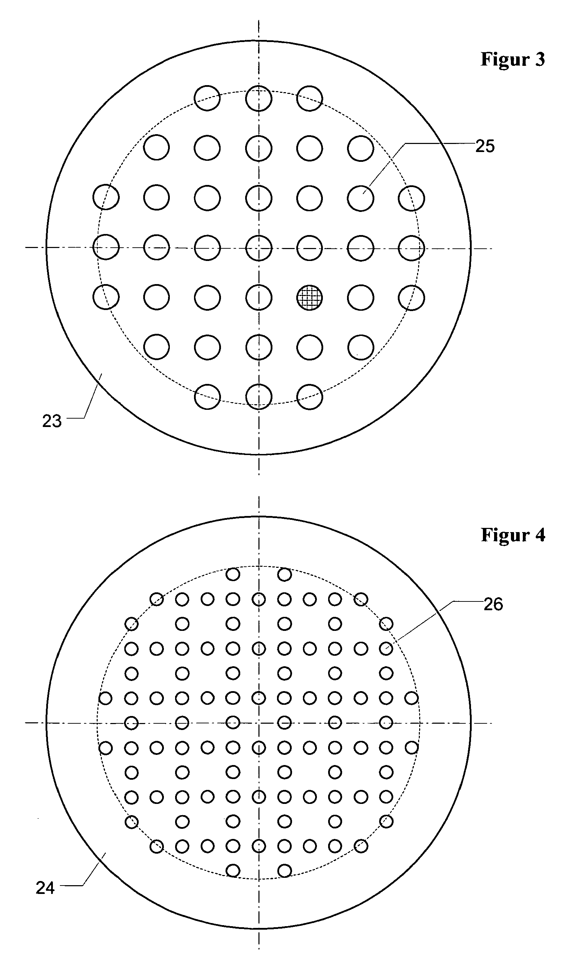

Als Lochmaske für die untere Stirnfläche wurde eine Lochmaske mit Löchern gemäß Figur 3 verwendet. Die Löcher (25) hatten einen Durchmesser von 6 mm und waren in einem quadratischen Raster mit einem Gitterabstand von 12 mm angeordnet. Der Durchmesser des Wabenkörpers ist durch den gestrichelten Kreis angedeutet. In einem Loch der Lochmaske ist das Gitter der Strömungskanäle des Wabenkörpers angedeutet. Die für diese Lochmaske gewählten Löcher überdecken etwa 18 Strömungskanäle.

Als Lochmaske für die obere Stirnfläche wurde eine Lochmaske mit Löchern gemäß Figur 4 verwendet. Die Löcher dieser Maske hatten einen Durchmesser von 3 mm.

Der Wabenkörper besaß nach dem Kalzinieren eine um 20 % höhere Beschichtung als der Wabenkörper des Vergleichsbeispiels. Der Staudruck dieses Wabenkörpers bei einem Massendurchfluß von 200 Nm³/h unterschied sich nicht von dem Staudruck des Wabenkörpers vom Vergleichsbeispiel.

Diese Ergebnisse belegen, daß mit dem erfindungsgemäßen Verfahren die Abscheidung von Katalysatormasse in den Poren des Wabenkörpers verbessert und damit die Beschichtungskonzentration ohne Verschlechterung des Staudrucks erhöht werden kann.

## Patentansprüche

1. Verfahren zur Einbringung einer katalytischen Beschichtung in die Poren eines keramischen Durchfluß-Wabenkörpers, welcher zwischen zwei Stirnflächen von parallelen Strömungskanälen durchzogen ist, die von Kanalwänden mit einer offenen Porenstruktur voneinander abgegrenzt sind, wobei zur Beschichtung eine Katalysatorsuspension verwendet wird, welche in einer Trägerflüssigkeit suspendierte Feststoffe enthält,
**gekennzeichnet durch** die Schritte,
a) Kontaktieren der beiden Stirnflächen des Wabenkörpers mit je einer Lochmaske mit offenen und geschlossenen Bereichen, wobei die Lochmasken so angeordnet werden, daß die offenen Bereiche der Lochmaske auf der einen Stirnfläche den geschlossenen Bereichen der Lochmaske auf der anderen Stirnfläche gegenüberliegen,
b) Einbringen der Katalysatorsuspension **durch** die Lochmaske auf der einen Stirnfläche des Wabenkörpers bis die Suspension **durch** die Lochmaske auf der anderen Stirnfläche austritt,
c) Ausblasen oder Absaugen eventuell überschüssiger Katalysatorsuspension,
d) Lösen des Kontaktes mit den Lochmasken und
e) Kalzinieren des beschichteten Wabenkörpers,
**dadurch gekennzeichnet,**
daß der Wabenkörper eine Porosität zwischen 30 und 90 % mit einem mittleren Porendurchmesser von 10 bis 50 µm aufweist, und
daß die Korngröße d₉₀ der Feststoffe der Suspension kleiner ist als der mittlere Porendurchmesser der Poren des Wabenkörpers.

2. Verfahren nach Anspruch 1,
**dadurch gekennzeichnet,**
**daß** die offenen und geschlossenen Bereiche der beiden Lochmasken in unterschiedlichen Mustern mit einem Gitterabstand angeordnet sind.

3. Verfahren nach Anspruch 2,
**dadurch gekennzeichnet,**
**daß** die Flächen der offenen und geschlossenen Bereiche der Lochmasken mehrere Strömungskanäle überdecken.

4. Verfahren nach Anspruch 3,
**dadurch gekennzeichnet,**
**daß** die offenen Bereiche der Lochmasken kreisförmig, quadratisch, rechteckig, sechseckig oder schlitzförmig ausgebildet sind.

5. Verfahren nach Anspruch 2,
**dadurch gekennzeichnet,**
**daß** die offenen und geschlossenen Bereiche der Lochmasken den Querschnittsflächen der Strömungskanäle angepaßt sind und so positioniert werden, daß die Strömungskanäle während der Beschichtung wechselseitig verschlossen sind.

6. Verfahren nach Anspruch 1,
**dadurch gekennzeichnet,**
**daß** die Lochmasken aus Kunststoff gefertigt sind.

7. Verfahren nach Anspruch 4,
**dadurch gekennzeichnet,**
**daß** die Lochmaske auf der Seite, mit welcher sie mit den Stirnflächen des Wabenkörpers in Kontakt gebracht werden, mit einer elastischen Kunststoff-Folie laminiert sind, die einen Flüssigkeitsaustritt zwischen Maske und Wabenkörper verhindert.

8. Verfahren nach Anspruch 1,
**dadurch gekennzeichnet,**
**daß** in Schritt b) die Katalysatorsuspension durch Einpressen, Einpumpen oder Einsaugen in den Wabenkörper eingebracht wird.

## Claims

1. Method for introducing a catalytic coating into the pores of a ceramic honeycomb flow body, through which parallel flow channels that are delimited from one another by channel walls with an open pore structure pass between two end faces, a catalyst suspension that contains solids suspended in a carrier liquid being used for the coating, **characterized by** the steps of
a) bringing the two end faces of the honeycomb body into contact with a respective perforated mask having open and closed regions, the perforated masks being arranged such that the open regions of the perforated mask on the one end face lie opposite the closed regions of the perforated mask on the other end face,
b) introducing the catalyst suspension through the perforated mask on the one end face of the honeycomb body until the suspension comes out through the perforated mask on the other end face,
c) blowing or sucking out any excess catalyst suspension,
d) releasing the contact with the perforated masks and
e) calcining the coated honeycomb body, **characterized in that** the honeycomb body has a porosity of between 30 and 90%, with a mean pore diameter of 10 to 50 µm, and **in that** the grain size d₉₀ of the solids of the suspension is less than the mean pore diameter of the pores of the honeycomb body.

2. Method according to Claim 1, **characterized in that** the open and closed regions of the two perforated masks are arranged in different patterns with a grid spacing.

3. Method according to Claim 2, **characterized in that** the areas of the open and closed regions of the perforated masks cover multiple flow channels.

4. Method according to Claim 3, **characterized in that** the open regions of the perforated masks are of a circular, square, rectangular, hexagonal or slitlike form.

5. Method according to Claim 2, **characterized in that** the open and closed regions of the perforated masks are adapted to the cross-sectional areas of the flow channels and positioned such that the flow channels are alternately closed during the coating.

6. Method according to Claim 1, **characterized in that** the perforated masks are produced from plastic.

7. Method according to Claim 4, **characterized in that**, on the side that is brought into contact with the end faces of the honeycomb body, the perforated masks are laminated with a flexible film of plastic, which prevents liquid from escaping between the mask and the honeycomb body.

8. Method according to Claim 1, **characterized in that** in step b) the catalyst suspension is introduced into the honeycomb body by being pressed, pumped or sucked in.

## Revendications

1. Procédé servant à apporter un revêtement catalytique dans les pores d'un nid d'abeilles en céramique poreuse traversé entre deux surfaces frontales par des canaux d'écoulement parallèles délimités les uns vis-à-vis des autres par des parois à structure poreuse ouverte, une suspension de catalyseur qui contient des solides mis en suspension dans un liquide porteur étant utilisée pour le revêtement, **caractérisé par** les étapes qui consistent à :
a) mettre en contact chacune des deux surfaces frontales du corps en nid d'abeilles avec un masque perforé présentant des parties ouvertes et des parties fermées, les masques perforés étant disposés de telle sorte que les parties ouvertes du masque perforé placées sur une surface frontale soient disposées face aux parties fermées du masque perforé placé sur l'autre surface frontale,
b) apporter la suspension de catalyseur par l'intermédiaire du masque perforé placé sur l'une des surfaces frontales du corps en nid d'abeilles jusqu'à ce que la suspension sorte par le masque perforé placé sur l'autre surface frontale,
c) souffler ou aspirer les éventuels excédents de suspension de catalyseur,
d) libérer le contact avec le masque perforé, et
e) calciner le corps en nid d'abeilles revêtu, **caractérisé en ce que**
le corps en nid d'abeilles présente une porosité comprise entre 30 et 90 % dont les pores ont un diamètre moyen de 10 à 50 µm, et
**en ce que** la granulométrie d₉₀ des solides de la suspension est inférieure au diamètre moyen des pores du corps en nid d'abeilles.

2. Procédé selon la revendication 1, **caractérisé en ce que** les parties ouvertes et les parties fermées des deux masques perforés sont disposées suivant des motifs différents présentant une distance de grille.

3. Procédé selon la revendication 2, **caractérisé en ce que** la surface des parties ouvertes et des parties fermées des masques perforés couvre plusieurs canaux d'écoulement.

4. Procédé selon la revendication 3, **caractérisé en ce que** les parties ouvertes des masques perforés ont une forme circulaire, carrée, rectangulaire, hexagonale ou en fente.

5. Procédé selon la revendication 2, **caractérisé en ce que** les parties ouvertes et les parties fermées des masques perforés sont adaptées à la superficie de la section transversale des canaux d'écoulement et sont disposées de telle sorte que les canaux d'écoulement soient fermés de manière alternée pendant le revêtement.

6. Procédé selon la revendication 1, **caractérisé en ce que** les masques perforés sont réalisés en matière synthétique.

7. Procédé selon la revendication 4, **caractérisé en ce que** sur le côté par lequel les masques perforés sont mis en contact avec les surfaces frontales du corps en nid d'abeilles sont stratifiés avec une feuille en matière synthétique élastique qui empêche la sortie de liquide entre le masque et le corps en nid d'abeilles.

8. Procédé selon la revendication 1, **caractérisé en ce qu'**à l'étape b), la suspension de catalyseur est apportée dans le corps en nid d'abeilles par pression, pompage ou aspiration.
